# FASCICULE DE BREVET EUROPEEN

(11) **EP 1 654 157 B1**
(45) Date de publication et mention de la délivrance du brevet: **17.04.2013**
(21) Numéro de dépôt: 04767909.7
(22) Date de dépôt: 21.07.2004
(51) Int. Cl.: B64D 10/00, A62B 7/14

(54) **CIRCUIT DE FOURNITURE D OXYGENE A DES PASSAGERS D' UN AERONEF**
KREISLAUF ZUR VERSORGUNG VON FLUGZEUGPASSAGIEREN MIT SAUERSTOFF
CIRCUIT FOR SUPPLYING OXYGEN TO AIRCRAFT PASSENGERS

(30) Priorité: 04.08.2003 FR 0350394
(43) Date de publication de la demande: 10.05.2006
(73) Titulaire: L'AIR LIQUIDE, Société Anonyme pour l'Etude et l'Exploitation des Procédés Georges Claude, 75007 Paris (FR)
(72) Inventeur: SCHMUTZ, Nicolas, F-75011 Paris (FR); DEHAYES, Jean, F-38660 Lumbin (FR); GAGET, Didier, F-38130 Echirolles (FR); CAZENAVE, Jean-Michel, F-38180 Seyssins (FR); LESSI, Stéphane, 1977 Newark DE (US)
(74) Mandataire: De Cuenca, Emmanuel Jaime
(86) Numéro de dépôt international: PCT/FR2004/050348
(87) Numéro de publication internationale: WO 2005/016750

(56) Documents cités:
- EP-A- 0 394 076
- EP-A- 0 448 258
- GB-A- 793 452
- GB-A- 865 084

## Description

La présente invention concerne les circuits de fourniture d'oxygène à des passagers d'aéronef en cas de décompression cabine.

Les réglementations aéronautiques (FAR par exemple) imposent dans les aéronefs commerciaux la présence d'un système d'oxygène de secours pour passagers apte à délivrer un débit d'oxygène pur déterminé à chaque passager en fonction de l'altitude de l'aéronef en cas de décompression accidentelle de la cabine.

Les systèmes actuellement proposés mettent en oeuvre un trou calibré déterminant le débit d'oxygène fourni au masque passager, un détendeur pneumatique, sensible à la pression ambiante, régulant la pression d'oxygène en amont des orifices calibrés.

Ces systèmes purement pneumatiques ont une précision et un temps de réponse faibles, ce qui se traduit par la fourniture d'un débit d'oxygène supérieur au débit réglementaire minimum requis, d'où la nécessité d'embarquer des réservoirs d'oxygène surdimensionnés, affectant les performances commerciales de l'aéronef.

De plus, ces systèmes, qui nécessitent de nombreuses tuyauteries et raccords, sont sources de fuites potentielles et imposent des opérations de maintenance longues et délicates.

Le document EP 0 394 076 A décrit un circuit de fourniture d'oxygène tel que celui décrit dans le préambule de la revendication 1.

La présente invention a pour objet de proposer un circuit de fourniture d'oxygène simplifié, performant, permettant de supprimer la plupart des inconvénients susmentionnés, en particulier, au niveau de la masse embarquée, et présentant une meilleure sécurité.

Pour ce faire, selon une caractéristique de l'invention, le circuit comprend, dans une ligne de fourniture d'oxygène connectée à une source d'oxygène sous pression, un régulateur de pression motorisé, actionnable en réponse à un signal de commande de pression fourni par une unité électronique de commande.

Selon une caractéristique plus particulière de l'invention :
- le circuit comporte un capteur de pression cabine fournissant à l'unité électronique de commande un signal de pression absolu pour l'élaboration du signal de commande du régulateur.

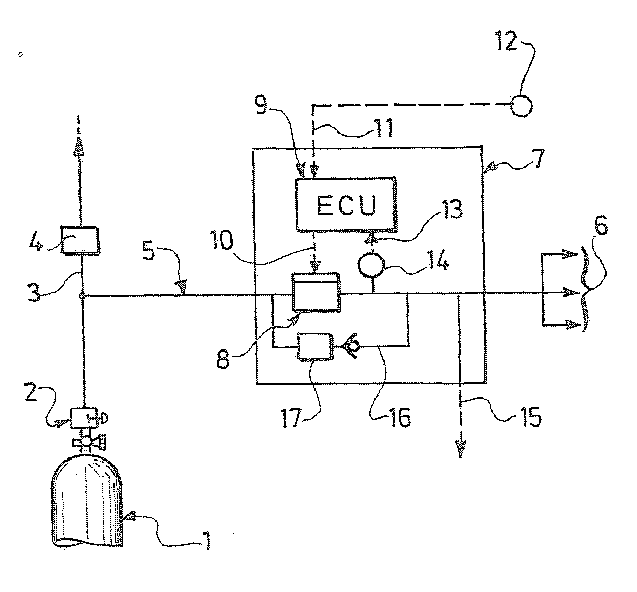

D'autres caractéristiques et avantages de l'invention ressortiront de la description suivante d'un mode de réalisation, donnée à titre illustratif mais nullement limitatif, faite en relation avec le dessin annexé, sur lequel :
la figure urique représente schématiquement un circuit de fourniture d'oxygène selon l'invention.

Sur la figure unique, on reconnaît un réservoir d'oxygène sous pression, en l'occurrence une bouteille 1 contenant de l'oxygène sous une pression nominale entre 120 et 200 bars, munie d'un détendeur 2 délivrant de l'oxygène à une pression typiquement entre 5 et 8 bars relatifs à une ligne 3, comprenant un régulateur de pression 4, de fourniture d'oxygène à l'équipage, et au moins à une ligne 5 de fourniture d'oxygène aux masques 6 de passagers en cabine.

Selon un aspect de l'invention, dans la ligne 5, est interposé un bloc de régulation 7 comprenant essentiellement une électrovanne motorisée 8, contrôlée, en fonction de paramètres extérieurs, par une unité électronique de commande 9.

Plus précisément, la vanne motorisée 8 est avantageusement du type de celle décrite dans le document EP-A-499 505 (Arnault/Zapata), au nom de la Demanderesse, dont le contenu est intégré ici pour référence, capable de réguler la pression en aval de la ligne 5 en suivant un signal de consigne 10 élaboré par l'unité électronique de commande 9 en fonction notamment d'un signal de pression cabine 11 fourni par un capteur de pression absolu 12, ainsi que d'un signal 13 de pression régulée fourni par un capteur de pression 14 dans la ligne 5 en aval du régulateur 8.

Avantageusement, la vanne 8 peut-être bloquée au moins temporairement en position fermée, de façon automatique et/ou manuelle, isolant le circuit passager vers les masques 6 pour donner la priorité de fourniture d'oxygène de la bouteille 2 à la ligne d'équipage 3.

Selon le choix du fabricant et/ou de l'exploitant de l'aéronef, l'unité électronique de commande 9 peut également déclencher l'ouverture des boîtes des masques 6 des passagers. De même, une connexion 15 peut être prévue en aval du régulateur 8 pour fourniture indépendante d'oxygène à un système embarqué d'oxygénothérapie, notamment pour l'accompagnement de malades insuffisants respiratoire.

Dans le mode de réalisation représenté sur la figure, le bloc 7 comporte une ligne de bi-passe 16 pourvue d'une électrovanne de sécurité 17 permettant de court-circuiter le régulateur 8 en cas de défaillance de ce dernier.

Comme précédemment mentionné, le système selon l'invention permet de suivre avec précision les débits minima imposés selon les différentes altitudes atteintes par l'aéronef, par les normes réglementaires, en évitant ainsi une surconsommation systématique d'oxygène et en permettant donc de réduire les dimensions ou le nombre des bouteilles d'oxygène 1, et donc leur poids.

Le système selon l'invention permet de réduire les nombres et les longueurs des tuyauteries d'oxygène, et donc les risques de fuite, notamment en cabine, en autorisant par ailleurs une logeabilité accrue dans les structures de la carlingue.

Les liaisons entre les capteurs, unités électroniques de commande et le régulateur 8 étant uniquement électriques, leur surveillance et suivi sont grandement facilités, ce qui évite des opérations de maintenance fastidieuses et notamment les déposes régulières.

Quoique l'invention ait été décrite en relation avec des modes de réalisation particuliers, elle ne s'en trouve pas limitée mais est susceptible de modifications et de variantes qui apparaîtront à l'homme du métier dans le cadre des revendications ci-après.

## Revendications

1. Circuit de fourniture d'oxygène à des passagers d'un aéronef, comprenant une ligne de fourniture d'oxygène (5) connectée à une source d'oxygène sous pression (1), **caractérisé en ce qu'**il comprend dans cette ligne un régulateur de pression motorisé (8) actionnable en réponse à un signal de commande de pression (10) fourni par une unité électronique de commande (9).

2. Circuit selon la revendication 1, **caractérisé en ce qu'**il comporte un capteur de pression cabine (12) fournissant à l'unité électronique de commande (9) un signal de pression absolue (11) pour l'élaboration dudit signal de commande (10) du régulateur (8).

3. Circuit selon la revendication 1 ou 2, **caractérisé en ce qu'**il comporte une ligne (16) de bi-passe du régulateur (8) pourvue d'une électrovanne de sécurité (17).

4. Circuit selon l'une des revendications précédentes, **caractérisé en ce que** la ligne de fourniture d'oxygène (5) comprend une connexion aval (15) à un système d'oxygénothérapie.

5. Circuit selon l'une des revendications précédentes, **caractérisé en ce que** la source d'oxygène comprend au moins une bouteille d'oxygène sous pression (1).

## Claims

1. Circuit for supplying oxygen to aircraft passengers, comprising an oxygen supply line (5) connected to a pressurised oxygen source (1), **characterised in that**, in this line, it comprises a motorised pressure regulator (8) that can be actuated in response to a pressure control signal (10) supplied by an electronic control unit (9).

2. Circuit according to claim 1, **characterised in that** it comprises a cabin pressure sensor (12) which supplies an absolute pressure signal (11) to the electronic control unit (9) for generating said control signal (10) of the regulator (8).

3. Circuit according to either claim 1 or claim 2, **characterised in that** it comprises a line (16) which bypasses the regulator (8) and is provided with a safety solenoid valve (17).

4. Circuit according to any of the preceding claims, **characterised in that** the oxygen supply line (5) comprises a downstream connection (15) to an oxygen therapy system.

5. Circuit according to any of the preceding claims, **characterised in that** the oxygen source comprises at least one pressurised oxygen cylinder (1).

## Patentansprüche

1. Kreislauf zum Bereitstellen von Sauerstoff an Passagiere eines Luftfahrzeugs, umfassend eine Leitung zum Bereitstellen von Sauerstoff (5), die mit einer unter Druck befindlichen Sauerstoffquelle (1) verbunden ist, **dadurch gekennzeichnet, dass** er in dieser Leitung einen motorbetriebenen Druckregler (8) umfasst, der auf ein Drucksteuersignal (10) hin, das von einer elektronischen Steuereinheit (9) bereitgestellt wird, betätigbar ist.

2. Kreislauf nach Anspruch 1, **dadurch gekennzeichnet, dass** er einen Kabinendrucksensor (12) aufweist, welcher der elektronischen Steuereinheit (9) ein absolutes Drucksignal (11) für die Erstellung des Signals zum Steuern (10) des Reglers (8) bereitstellt.

3. Kreislauf nach Anspruch 1 oder 2, **dadurch gekennzeichnet, dass** er eine Leitung (16) für den Bypass des Reglers (8) aufweist, die mit einem Magnetsicherheitsventil (17) versehen ist.

4. Kreislauf nach einem der vorhergehenden Ansprüche, **dadurch gekennzeichnet, dass** die Leitung zum Bereitstellen von Sauerstoff (5) eine stromabwärts angeordnete Verbindung (15) mit einem Sauerstofftherapiesystem umfasst.

5. Kreislauf nach einem der vorhergehenden Ansprüche, **dadurch gekennzeichnet, dass** die Sauerstoffquelle mindestens eine unter Druck befindliche Sauerstoffflasche (1) umfasst.
